# EUROPEAN PATENT SPECIFICATION

(11) **EP 2 441 359 B1**
(45) Date of publication and mention of the grant of the patent: **30.07.2014**
(21) Application number: 11185290.1
(22) Date of filing: 14.10.2011
(51) Int. Cl.: A47J 31/00

(54) **Method and implement for extemporary preparation of cold coffee starting from hot coffee**
Verfahren und Gerät zur extemporalen Zubereitung kalten Kaffees ausgehend von heißem Kaffee
Procédé et outil de préparation extemporanée de café froid à partir de café chaud

(30) Priority: 14.10.2010 IT TO20100837
(43) Date of publication of application: 18.04.2012
(73) Proprietor: Luigi Lavazza S.p.A., 10154 Torino (IT)
(72) Inventor: Viarizzo, Francesco, 10154 Torino (IT)
(74) Representative: Gallarotti, Franco

(56) References cited:
- EP-A1- 2 236 060
- US-A1- 2004 025 705
- US-A1- 2008 264 265
- US-A1- 2010 089 245

## Description

### Field of the invention

The present invention relates to a method for extemporary preparation of cold coffee starting from hot coffee, and has been developed with particular reference to the preparation of cold coffee starting from hot espresso coffee.

### Prior art

A cold beverage appreciated by lovers of coffee, particularly in the summer period, is the so-called *"cold Italian-style coffee",* obtained starting from hot espresso coffee.

This beverage is prepared extemporary (i.e. on the spot) and typically envisages preparation of an amount of hot espresso coffee, its mixing with an amount of more or less fragmented ice, stirring or shaking of the coffee-ice mixture, and subsequent separation of the coffee from the residual ice. In this way, a considerable cooling of the espresso coffee initially made is obtained, with a dilution thereof in the water produced by partial melting of the ice.

According to a first mode of preparation, an amount of ice cubes is put in a jar or the like, to which there is then added the dose of hot espresso coffee, for example corresponding to one or two small cups. With the aid of an implement, such as a spoon, the ice and the coffee are mixed inside the jar, for a time of generally less than one minute so as to cause reduction of the temperature of the coffee and a dilution thereof due to partial melting of the ice. Using a sieve or a filter just the liquid content of the jar is then poured into a smaller container, such as a glass, used for the final consumption of the beverage.

The other manual technique normally used envisages that the amount of coffee is introduced into a shaker, where there has previously been put an amount of ice cubes. The shaker is closed and shaken manually, also in this case generally for a time of less than one minute. After shaking, just the liquid content of the shaker is poured, with the aid of a sieve or a filter, into the container envisaged for final consumption, such as a glass.

In both modes of preparation indicated, the final temperature of the coffee and its degree of dilution are substantially a function of the time of stirring or shaking and of permanence of the coffee in contact with the ice.

Typically, in most common automatic machines for preparation of espresso coffee, the temperature of the water for infusion is between 80°C and 95°C, ideally between 85°C and 92°C. Immediately after infusion, when it reaches the cup, the hot espresso coffee has a temperature of roughly between 70°C and 85°C, ideally between 75°C and 80°C. Typically, in the case of consumption of hot coffee in normal coffee cups used in bars, the time for dispensing of the entire dose and the brief permanence of the coffee inside the cup, prior to its consumption, is such as to cause a reduction of its temperature to 55°C - 65°C, ideally to approximately 58°C - 60°C, which is generally considered optimal.

In the case of the preparation of a cold Italian-style coffee, the hot espresso coffee - after dispensing from the machine into a cup or a small jug - should be introduced practically immediately into the container containing the ice, whether it is a jar or a shaker, and consequently ideally at a temperature of around 80°C.

On the other hand, the final cold coffee should preferably have a temperature of less than 5°C: the time of stirring or shaking and of permanence of the coffee in contact with the ice should hence be ideally a function of this final temperature.

The quality of the cold coffee prepared in the aforesaid ways depends not only upon the quality of the initial espresso coffee but also upon the degree of skill of the person who prepares the beverage. In fact, more or less long times of stirring or shaking or of length of contact between ice and coffee can significantly affect the quality of the beverage as well as the amount of ice used and the energy of stirring or shaking.

US-A-2004/025705 discloses a percolator device that can be used indifferently for preparing hot coffee or iced coffee. The device comprises a frame that supports a hopper container, underneath which a collection container can be housed, at a distance therefrom, so that an outlet in the bottom of the hopper container faces the inlet of the collection container. Positioned on the bottom of the hopper container is a filter, on which a dose of ground coffee is put. To prepare hot coffee hot water is poured into the hopper container, which flows through the layer of ground coffee and the underlying filter: the hot-coffee liquid thus obtained flows out, through the outlet in the bottom, into the underlying collection container. Instead, to prepare iced coffee, ice cubes are put into the hopper container, on top of the layer of ground coffee. The ice water flows through the layer of ground coffee and the underlying filter: the iced-coffee liquid thus obtained flows out, through the outlet in the bottom, into the underlying collection container.

### Summary and object of the invention

In the light of what is set forth above, the present disclosure provides an implement of new conception, which is simple and inexpensive to produce and enables simplification of on extemporary preparation of cold coffee starting from hot coffee. An aim of the invention is to provide a method that renders the quality of the final cold beverage substantially independent of the skill of the person who prepares it. Yet another object of the invention is to indicate a new mode for manual preparation of cold coffee starting from hot coffee that is simpler and more efficient and hygienic than traditional ones.

The above and yet other aims are achieved, according to the present invention, by a method for extemporary preparation of cold coffee starting from hot coffee having the characteristics specified in Claims 1. The claims form an integral part of the technical teaching provided herein in relation to the invention.

### Brief description of the drawings

Further aims, characteristics, and advantages of the invention will emerge from the ensuing description, with reference to the annexed drawings, which are provided purely by way of non-limiting example and in which:
- Figures 1 and 2 are schematic perspective views, from different angles, of an implement for use in accordance with the invention;
- Figures 3, 4 and 5 are perspective views aimed at illustrating the modalities of use of the implement of Figures 1-2, Figure 3 being at a larger scale than Figures 4 and 5;
- Figures 6 and 7 are, respectively, a perspective view and a view in side elevation of a second implement for use in accordance with the invention; and
- Figure 8 is a cross section according to the line VIII-VIII of Figure 7.

### Description of preferred embodiments of the invention

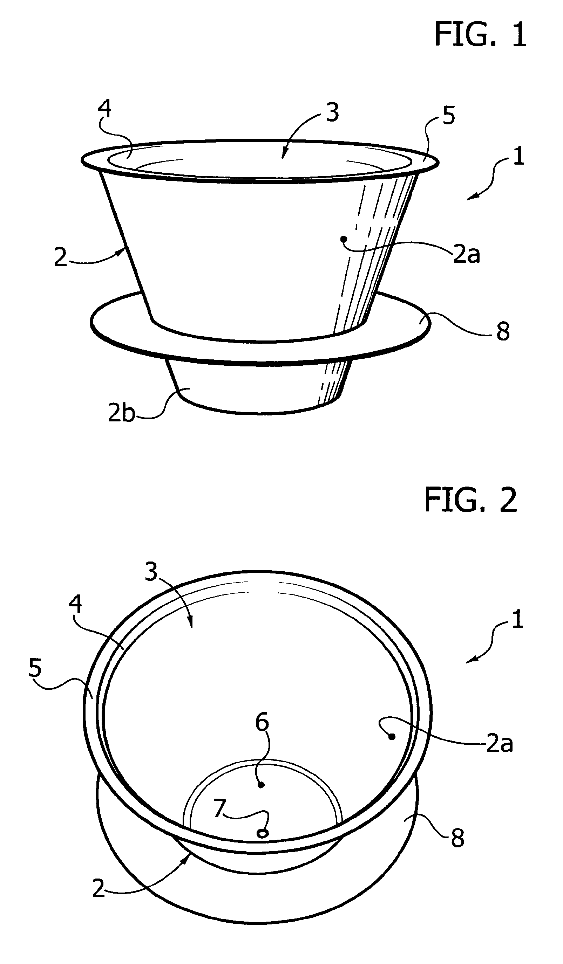

In Figure 1, designated as a whole by 1 is an implement prearranged for extemporary (i.e., on-the-spot) preparation of cold coffee starting from hot coffee.

The implement 1 has a body having a main portion 2 that defines a cavity or space 3 for containing and withholding a mass of unpressed fragmented ice. In the non-limiting example represented, the body portion 2 is substantially shaped like a truncated cone, defined by a peripheral wall 2a. Said truncated cone is open at the upper base so as to define a mouth 4 for charging into the cavity 3 the mass of fragmented ice and, as will be seen hereinafter, an amount of hot coffee. Preferably, but not necessarily, provided at the mouth 4 is an edge 5 projecting outwards. The lower base of the truncated cone, i.e., of the body portion 2, includes a wall, which defines a bottom of the cavity 3, designated by 6 in Figure 2. Of course, the truncated-cone shape, albeit preferred, is not to be considered as being in any way limiting for the purposes of implementation of the invention.

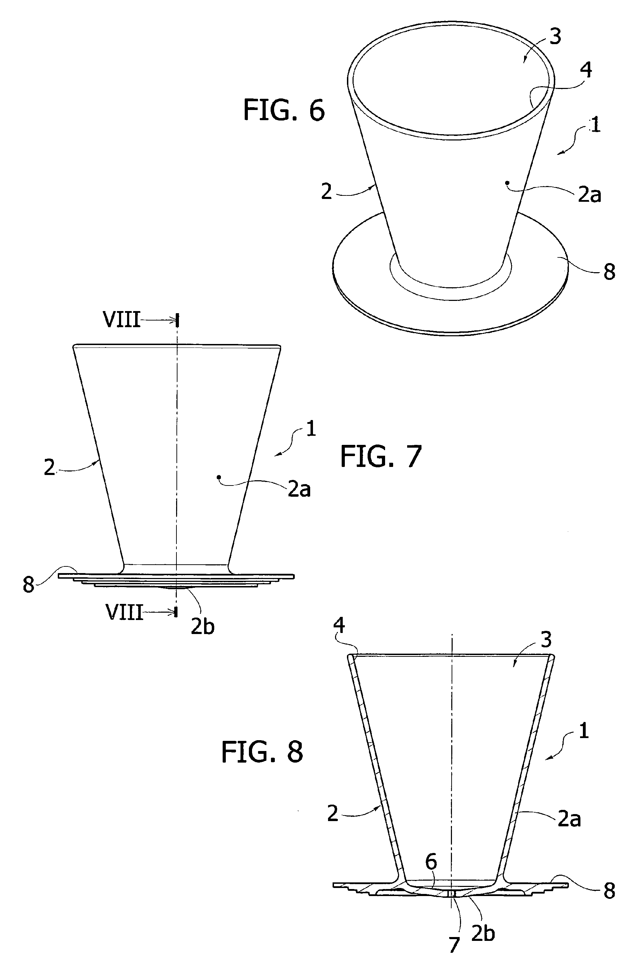

According to one characteristic, the bottom 6 has an outlet, sized to enable outflow of cooled coffee from the cavity 3, at the same time preventing a substantial passage of the fragmented ice. In the case exemplified, and as may be seen in Figure 2, the aforesaid outlet 7 is constituted by a single hole, provided in the bottom 6, preferably in a substantially central position. Possibly, the bottom 6 can be more or less concave (see, for example, the embodiment of Figures 6-8, described hereinafter).

In addition, as will emerge more clearly in what follows, the cavity 3 and the outlet 7 are sized so that, following upon introduction of the amount of hot coffee into the cavity 3 already containing the mass of fragmented ice, an effective infusion is obtained between coffee and ice such as to cause a marked reduction of the temperature of the coffee prior to its outflow through the outlet 7, and without it being at all necessary to shake the implement 1.

Basically, the section of passage of the outlet 7 is sufficiently small, as compared to the volume of the cavity 3, to guarantee a relatively slow outflow of the liquid, and hence a certain length of time of contact between the ice and the majority of the dose of coffee introduced: this time guarantees, without any need for shaking the implement 1, reduction of the temperature of the hot coffee and dilution thereof with water deriving from partial melting of the ice.

In a preferred embodiment the volume of the cavity 3 and the overall section of passage of the outlet 7 are sized so that the temperature of the cooled coffee, i.e., of the coffee that comes out of the outlet 7, is at least 80%, preferably at least 90%, less than the temperature of the initial hot coffee.

Preferably, the implement 1 is provided with means for direct resting and/or self-support on an underlying container for collection of the cold coffee so that the bottom 6 with the outlet 7 faces the inside of the container itself. Once again preferably, these means comprise at least one flange element projecting radially outwards from the peripheral wall 2a of the main portion of the body 2.

For said purpose, provided in the embodiment of Figures 1-2 is a flange 8, which projects from the wall 2a in an intermediate region between the mouth 4 and the bottom 6. The flange 8 is substantially circular and can be made of a single piece with the body portion 2 or else be configured as an added part.

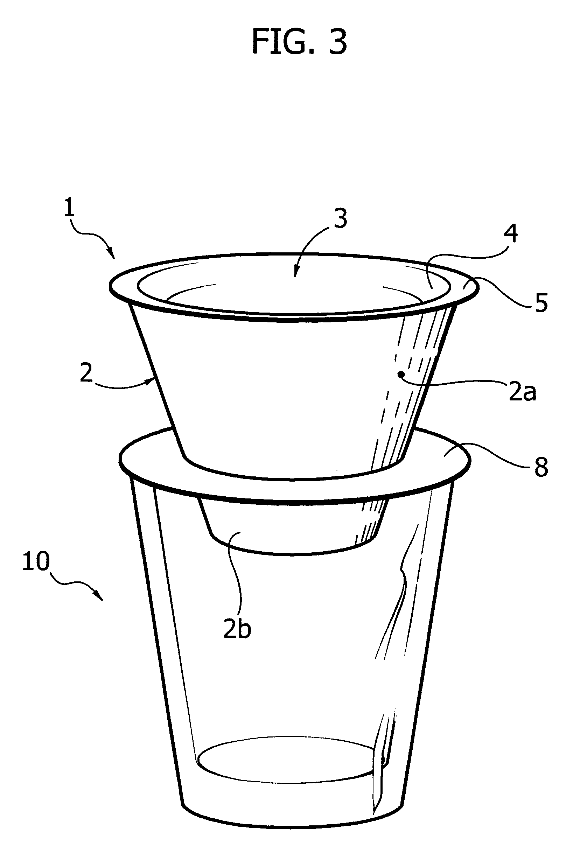

Preferably, the diameter of the flange 8 is sufficiently large to enable resting thereof on the top edge of the mouth of an underlying collection container 10, as may be seen, for example, in Figures 3-5. The dimensions of the flange, or of the various means that provide the function thereof, can be chosen so as to enable use of the implement in combination with the majority of ordinary glasses for consumption of cold beverages.

It is also possible to envisage a kit, for example for commercial premises such as bars and the like, which includes at least one implement 1 and at least one container 10, preferably a plurality of containers 10 that are the same as one another, sized specifically for use in combination with the implement 1.

The provision of the resting and self-supporting means represented in the example by the flange 8, albeit preferred, is to be considered optional in so far as the implement 1 could possibly have a grip for supporting it manually.

Once again with reference to the embodiment of Figures 1-2, and irrespective of the presence or otherwise of the resting and self-supporting means, the body portion 2 can be configured so that a lower part thereof, designated by 2b in Figure 3, including the bottom 6, projects within the collection container 10 used. Hence, in this perspective, the diameter of the base of the portion 2, i.e., of the bottom 6 in the case illustrated, may be chosen to enable partial insertion of the bottom part 2b in the majority of glasses commonly used for consumption of cold beverages.

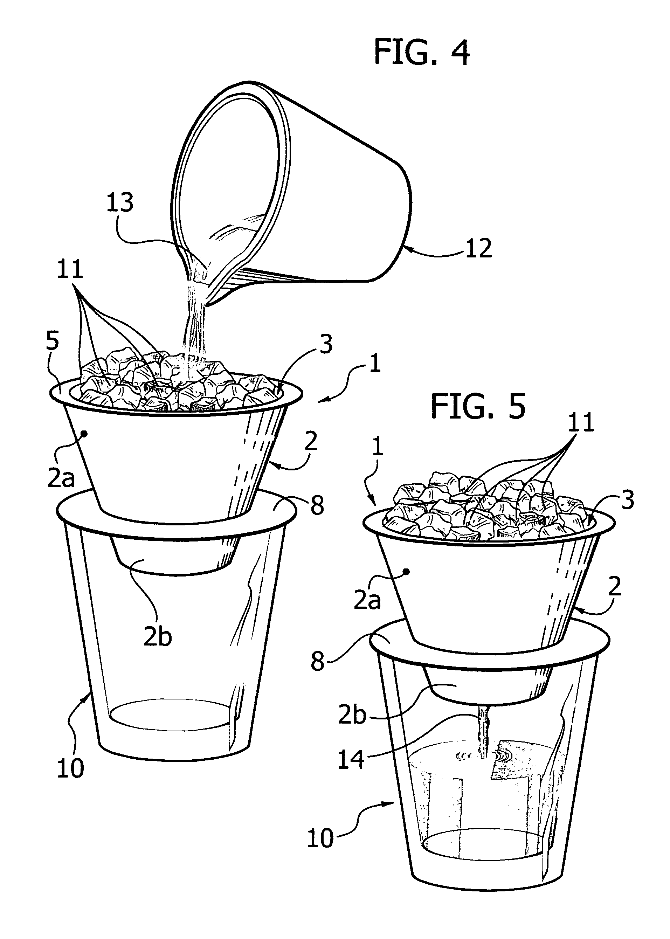

Figures 4 and 5 exemplify the mode of use of the implement 1 in the method according to the invention.

After the implement has been positioned on the container 10 (as shown in Figure 3), an amount of fragmented ice, preferably shredded, for example using an ice shredder or the like is put in the cavity 3. Preferably, the ice, represented schematically in Figure 4, where it is designated by 11, must not be pressed or compacted within the cavity 3.

With the implement 1 resting on the container 10, the dose of espresso coffee is prepared, for example in an amount corresponding to approximately a coffee cup (indicatively approximately 30-40 ml). The espresso coffee coming out of the machine is preferably collected in a single small container, such as the one designated by 12 in Figure 4, for example a cup or a jug. The hot coffee, designated by 13, contained in the jug 12 is then immediately poured into the cavity 3 of the implement 1, which already contains the ice 11.

As has been said, the section of passage of the outlet 7 of the bottom 6 of the cavity 3 is sufficiently small, with respect to the volume of the cavity 3, to guarantee a slow outflow of the coffee through the outlet itself, as exemplified in Figure 5; in this way, albeit in the presence of a constant outflow, it is guaranteed that the coffee 13 remains in contact with the ice 11d for a certain length of time, and hence undergoes a substantial cooling.

The coffee cooled by the ice, designated by 14 in Figure 5, flows out into the container 10, being diluted with the water due to partial melting of the ice 11. When all the coffee has come out of the cavity 3, a condition that can be detected visually, the implement 1 can be removed from the container 10. The cold coffee 14, possibly sweetened, can then be directly consumed from the container 10.

Figures 6-8 illustrate a second possible embodiment of an implement for use in the method according to the invention. In said figures, the same reference numbers as those appearing in Figures 1 and 2 are used to designate elements that are technically equivalent to the ones described previously.

The implement 1 of Figures 6-8 differs from that of Figures 1-2 basically as regards the position of the resting flange 8, which is here defined substantially at the bottom 6 where the outlet 7 is made, and in that said bottom 6 is slightly concave. As may be seen, in said embodiment the edge 5 is not provided, and the bottom portion 2b of the body 2 projects to a minimal extent underneath the flange 8: however, as has already been said, this characteristic is not essential.

In this embodiment, the bottom face of the flange 8 has a series of annular reliefs, which define a series of concentric steps (see Figures 7 and 8), aimed at facilitating centring of the implement 1 with respect to the mouth of an underlying collection container. Said solution can obviously be adopted also in the embodiment of Figures 1 and 2.

As may be appreciated, use of the implement 1 of Figures 6-8 is altogether similar to what is described with reference to Figures 3-5.

By way of indication, in embodiments of the sort illustrated, the outlet 7 can have a diameter of approximately 2.5 mm, i.e., its overall cross section can be approximately 4.9 mm², with a volume of containment of the cavity 3 of approximately 200 ml (substantially corresponding to approximately 120 grams of shredded ice).

With a sizing of this sort, and using an amount of approximately 30-40 ml of initial hot espresso coffee 13 at approximately 80°C, a complete outflow is obtained in approximately 30 seconds, with a reduction of the temperature of the coffee to approximately 2-4°C, which is ideal for the consumption of a cold Italian-style coffee.

In the embodiments exemplified herein, the outlet 7 of the bottom 6 comprises a single hole, the diameter of which is comprised between approximately 1 mm and approximately 3 mm, in particular approximately 2.5 mm. Said embodiment is to be understood in any case as preferred and not exclusive. In alternative embodiments, for example, the outlet provided on the bottom may comprise a number of openings, it remaining understood, at the same time, that the overall section of passage will be sufficiently small, in proportion to the volume of the cavity, in order to guarantee a relatively slow outflow and hence an effective infusion or contact between coffee and ice.

In general, for an implement designed for the preparation of a single dose of cold coffee, the outlet - constituted by one or more holes - can have an overall section of passage comprised between approximately 0.785 mm² and approximately 7 mm², and the cavity 3 can have a capacity comprised between approximately 100 ml and 250 ml (corresponding to approximately 70 g to 150 g of shredded ice). With said sizing, the time of infusion/outflow is comprised approximately between 20 and 40 seconds.

The implement 1 can easily be produced industrially, for example using metal material, such as stainless steel, or else plastic, for example polycarbonate.

The dimensions of the implement 1 are relatively contained, as compared to jugs and shakers traditionally used for preparing single doses of cold coffee. Indicatively, with reference to the examples of embodiment illustrated, the body portion 2 can have a height comprised between approximately 60 mm and approximately 120 mm, in particular approximately 90 mm, with a larger diameter substantially comprised between approximately 60 and approximately 100 mm, in particular approximately 75 mm, and a smaller diameter substantially comprised between approximately 30 and approximately 50 mm, in particular approximately 35 mm. The flange 8 can have a diameter comprised between approximately 50 and approximately 120 mm, in particular approximately 55 mm. The ratio between the overall section of passage of the outlet and the overall area of the bottom is preferably less than 0.01, in particular less than 0.005.

The characteristics and advantages of the present invention emerge clearly from the foregoing description.

As has been said, the implement 1 is simple to produce, has contained cost, and is simple to use and clean. Irrespective of the quality of the initial hot coffee used, the implement 1 enables the quality of the final product to be rendered less dependent upon the skill of the person who prepares it. In this perspective, the cavity 3 can be understood as a "measure" of the optimal amount of fragmented ice to be used, and is in any case such as to receive at the same time a recommended dose of hot coffee for the preparation of the final cold beverage. As has been said, the sizing of the cavity and of the section of passage of the outlet, whether this be a single hole or a number of holes, is preferably chosen precisely in this perspective.

The method of preparation of the beverage according to the invention does not imply any stirring or shaking of containers, unlike the case of the known art, the preparation being in fact more similar to a percolation process. Consequently, in the albeit short time of outflow of the coffee from the implement, the person making the preparation can possibly do other things.

A further advantage of a practical nature, which may be appreciated above all in the case of use of the implement 1 in public premises, is linked to the reduction of the objects that have to be used and cleaned, as compared to the prior art. The known art envisages use, and hence subsequent washing, of at least four objects, i.e., at least one container for containing the hot coffee dispensed by the machine, a jar or a shaker for containing the ice to which the hot coffee is to be added, a sieve or a filter and the final container for consumption of the beverage. In the case of the present invention, the objects to be used and cleaned are only three (the container for the hot coffee, the implement according to the present disclosure, and the final container). It will be appreciated then that in the embodiment exemplified the implement 1 is without one or more filters, and this simplifies use and cleaning thereof.

Of course, the details of construction and the embodiments may vary widely with respect to what is described and illustrated herein, purely by way of example, without thereby departing from the scope of the invention as defined by the annexed claims.

The invention has been described with particular reference to use of the implement 1 for the preparation of cold Italian-style coffee starting from hot espresso coffee. It will be appreciated, however, that the implement 1 can be used also with hot coffee different from espresso coffee, for example coffee obtained via a classic coffee pot of the *moka* type.

## Claims

1. A method for extemporary preparation of cold coffee starting from hot coffee, the method comprising the steps of:
- providing an implement (1) having a body (2, 8) defining a cavity (3) for withholding fragmented ice (11), the body (2, 8) having an upper mouth (4), for introduction into the cavity (3) of an amount of fragmented ice (11) and an amount of hot coffee (13), and a bottom (6) substantially opposite to the mouth (4), where the bottom (6) has an outlet (7);
- providing an amount of hot coffee (13);
- providing a container (10) for collecting the cold coffee (10);
- setting the implement (1) on top of the collection container (10), with the bottom (6) of the implement (1) facing the inside of the collection container (10);
- setting an amount of fragmented ice (11) in the cavity (3) of the implement (1);
- pouring the dose of hot coffee (13) into the cavity (3) of the implement (1);
- without any need to shake the implement (1) and the collection container (10), waiting for outflow into the collection container (10) of the cooled coffee (14) diluted with water resulting from melting of the ice (11), through the outlet (7) of the bottom (6) of the cavity (3);
- removing the implement (1) containing the residual ice from the top of the collection container (10).

2. The method according to Claim 1, wherein:
- with an amount of hot coffee (13) comprised between approximately 30 ml and approximately 40 ml at a temperature of between 70°C and 85°C, preferably between 75°C and 80°C; and
- with an amount of fragmented ice comprised between approximately 70 g and approximately 150 g, in particular approximately 120 g;
the cooled coffee (14) that reaches the collection container (10) has a temperature of less than 5°C, in particular between approximately 2°C and 4°C.

3. The method according to Claim 1 or Claim 2, wherein
- with an outlet (7) of the implement (1) that comprises one or more openings for an overall section of passage comprised between approximately 0.785 mm² and approximately 7 mm², in particular approximately 4.9 mm²; and
- with a cavity (3) of the implement (1) that has a capacity comprised between approximately 100 ml and approximately 250 ml, in particular approximately 150 ml,
the waiting time is comprised between 20 and 40 seconds approximately.

4. The method according to Claim 1, wherein the coffee is espresso coffee.

## Patentansprüche

1. Verfahren zur spontanen Zubereitung von kaltem Kaffee ausgehend von heißem Kaffee, wobei das Verfahren die nachfolgenden Schritte umfasst:
- Bereitstellen eines Einsatzes (1) mit einem Körper (2, 8), der einen Hohlraum (3) zum Zurückhalten von Eisstücken (11) definiert, wobei der Körper (2, 8) eine obere Öffnung (4) zum Einfüllen einer Menge an Eisstücken (11) und einer Menge heißen Kaffees (13) in den Hohlraum (3) und einen Boden (6) aufweist, der im Wesentlichen der Öffnung (4) gegenüberliegt, wobei der Boden (6) einen Auslass (7) aufweist;
- Bereitstellen einer Menge heißen Kaffees (13);
- Bereitstellen eines Behälters (10) zum Auffangen des kalten Kaffees (10);
- Anordnen des Einsatzes (1) oben auf dem Auffangbehälter (10), wobei der Boden (6) des Einsatzes (1) zur Innenseite des Auffangbehälters (10) weist;
- Anordnen einer Menge an Eisstücken (11) in dem Hohlraum (3) des Einsatzes (1);
- Eingießen der Dosis heißen Kaffees (13) in den Hohlraum (3) des Einsatzes (1);
- Warten, ohne die Notwendigkeit, den Einsatz (1) und den Auffangbehälter (10) zu schütteln, auf das Ablaufen des gekühlten Kaffees (14), der mit dem von dem geschmolzenen Eis (11) stammenden Wasser verdünnt wird, durch den Auslass (7) des Bodens (6) des Hohlraumes (3) in den Auffangbehälter (10);
- Entfernen des Einsatzes (1), der das restliche Eis enthält, von der Oberseite des Auffangbehälters (10).

2. Verfahren nach Anspruch 1, wobei,
- mit einer Menge heißen Kaffees (13), die zwischen ungefähr 30 ml und ungefähr 40 ml bei einer Temperatur von zwischen 70 °C und 85 °C, vorzugsweise zwischen 75 °C und 80 °C liegt; und
- mit einer Menge an Eisstücken, die zwischen ungefähr 70 g und ungefähr 150 g, insbesondere ungefähr 120 g liegt;
der gekühlte Kaffee (14), der in den Auffangbehälter (10) gelangt, eine Temperatur von weniger als 5 °C, insbesondere zwischen ungefähr 2 °C und 4 °C hat.

3. Verfahren gemäß Anspruch 1 oder Anspruch 2, wobei,
- mit einem Auslass (7) des Einsatzes (1), der eine oder mehrere Öffnungen für einen gesamten Durchgangsquerschnitt umfasst, der zwischen ungefähr 0,785 mm² und ungefähr 7 mm², und insbesondere ungefähr bei 4,9 mm² liegt; und
- mit einem Hohlraum (3) des Einsatzes (1), der ein Fassungsvermögen aufweist, das ungefähr zwischen 100 ml und ungefähr 250 ml, insbesondere ungefähr bei 150 ml liegt,
die Wartezeit ungefähr zwischen 20 und 40 Sekunden beträgt.

4. Verfahren nach Anspruch 1, wobei der Kaffee Espressokaffee ist.

## Revendications

1. Procédé de préparation extemporanée de café froid à partir de café chaud, le procédé comprenant les étapes consistant à :
- fournir un accessoire (1) comportant un corps (2, 8) définissant une cavité (3) pour y mettre de la glace pilée (11), le corps (2, 8) comportant une ouverture supérieure (4), pour introduction dans la cavité (3) d'une quantité de glace pilée (11) et d'une quantité de café chaud (13), et un fond (6) sensiblement opposé à l'ouverture (4), où le fond (6) comporte un orifice de sortie (7) ;
- fournir une quantité de café chaud (13) ;
- fournir un récipient (10) pour collecter le café froid (10) ;
- installer l'accessoire (1) sur le haut du récipient de collecte (10), avec le fond (6) de l'accessoire (1) dirigé vers l'intérieur du récipient de collecte (10) ;
- placer une quantité de glace pilée (11) dans la cavité (3) de l'accessoire (1) ;
- verser la dose de café chaud (13) dans la cavité (3) de l'accessoire (1) ;
- sans avoir besoin de secouer l'accessoire (1) et le récipient de collecte (10), attendre l'écoulement dans le récipient de collecte (10) du café refroidi (14) dilué avec de l'eau résultant de la fonte de la glace (11), à travers l'orifice de sortie (7) du fond (6) de la cavité (3) ;
- enlever l'accessoire (1) contenant la glace restante du haut du récipient de collecte (10).

2. Procédé selon la revendication 1, dans lequel :
- avec une quantité de café chaud (13) comprise entre approximativement 30 ml et approximativement 40 ml à une température entre 70°C et 85°C, de préférence entre 75°C et 80°C ; et
- avec une quantité de glace pilée comprise entre approximativement 70 g et approximativement 150 g, en particulier approximativement 120 g ;
- le café refroidi (14) qui atteint le récipient de collecte (10) a une température de moins de 5°C, en particulier entre approximativement 2°C et 4°C.

3. Procédé selon la revendication 1 ou la revendication 2, dans lequel :
- avec un orifice de sortie (7) du accessoire (1) qui comprend une ou plusieurs ouvertures pour une section globale de passage comprise entre approximativement 0,785 mm² et approximativement 7 mm², en particulier approximativement 4,9 mm² ; et
- avec une cavité (3) de l'accessoire (1) qui a une capacité comprise entre approximativement 100 ml et approximativement 250 ml, en particulier approximativement 150 ml,
- le temps d'attente est compris entre 20 et 40 secondes approximativement.

4. Procédé selon la revendication 1, dans lequel le café est du café expresso.
